Europäisches Patentamt

European Patent Office

Office européen des brevets

(19)

(11) **EP 0 579 631 B1**

(12) **EUROPÄISCHE PATENTSCHRIFT**

(45) Veröffentlichungstag und Bekanntmachung des Hinweises auf die Patenterteilung:
**24.04.1996 Patentblatt 1996/17**

(51) Int Cl.6: **E02D 3/10**, E02B 11/00

(21) Anmeldenummer: **92907285.8**

(22) Anmeldetag: **31.03.1992**

(86) Internationale Anmeldenummer:
**PCT/EP92/00707**

(87) Internationale Veröffentlichungsnummer:
**WO 92/18702 (29.10.1992 Gazette 1992/27)**

(54) **DURCH KLEBEVERBINDUNGEN HERGESTELLTE WASSERGEWINNUNGSELEMENTE UND DEREN VERWENDUNG**

WATER EXTRACTION COMPONENTS PRODUCED BY ADHESIVE BONDS AND THEIR USE

ELEMENTS DE DRAINAGE FABRIQUES PAR ASSEMBLAGE COLLE ET APPLICATION

(84) Benannte Vertragsstaaten:
**AT BE CH DE DK ES FR GB GR IT LI NL SE**

(30) Priorität: **09.04.1991 DE 9104265 U**
**16.09.1991 DE 4131099**

(43) Veröffentlichungstag der Anmeldung:
**26.01.1994 Patentblatt 1994/04**

(73) Patentinhaber:
- **BAYER AG**
  **D-51368 Leverkusen (DE)**
- **LAUSITZER BRAUNKOHLE AKTIENGESELLSCHAFT (LAUBAG)**
  **D-01968 Senftenberg (DE)**

(72) Erfinder:
- **FRANKE, Joachim**
  **D-5060 Bergisch Gladbach (DE)**
- **GRÜNE, Horst**
  **D-5653 Leichlingen (DE)**
- **FÄHLING, Friedhelm**
  **D-4130 Moers 1 (DE)**
- **TOST, Reinhard**
  **D-7500 Cottbus (DE)**
- **FAHLE, Werner**
  **D-7500 Cottbus (DE)**
- **DOMKE, Konrad**
  **D-7840 Senftenberg (DE)**

(74) Vertreter: **Braun, Rolf, Dr.**
**Bayer AG**
**Konzernverwaltung RP**
**Patentabteilung**
**D-51368 Leverkusen (DE)**

(56) Entgegenhaltungen:
EP-A- 0 133 414          WO-A-85/02895
FR-A- 2 138 714          US-A- 3 122 888

- **WORLD PATENTS INDEX Week 4776, 9. Oktober 1976 Derwent Publications Ltd., London, GB; AN 76-87868X [47] & JP,A,51114418 (SHOW BOND)**

## Beschreibung

Die vorliegende Erfindung betrifft flüssigkeitsdurchlässige Elemente, die aus mehreren stützkörperfreien Rohr-Segmenten bestehen.

Bei dem Ausdruck "stützkörperfrei" handelt es sich um einen Technologie-spezifischen Ausdruck, also einen Fachbegriff. Der Fachmann auf dem hier vorliegenden Gebiet versteht darunter einen Zustand, bei dem keine innere oder äußere zusätzliche Befestigung, Stütze, Armierung o.a. verwendet wird. Die Flüssigkeitsdurchlässigen Elemente können also so gestaltet werden, daß sie nur als reines Filterelement gestaltet sind und diese einzelnen Elemente bzw. Segmente verklebt werden. Die Notwendigkeit einer externen oder eingebauten Stützvorrichtung entfällt. Diese Ausdrucksweise ist bei den auf diesem Gebiet tätigen Fachleuten üblich und bekannt.

Zur Entwässerung von Abbaugebieten im Tagebau, von Deponien und zur Trinkwassergewinnung werden sogenannte Entwässerungselemente verwendet. Diese Elemente sind Rohrsegmente, in Längen, die üblicherweise zwischen 1 und 3 m betragen, die zu einem Rohr verbunden werden, das z.B. einen gebohrten Brunnen auskleidet. Die grundsätzliche Aufgabe des Entwässerungselementes besteht darin, Wasser auszufiltern und die am Grund des Brunnens befindliche Pumpe damit vor abrasiven Verunreinigungen zu schützen. Zur Gewinnung von Wässern definierter Qualität, wie z.B. bei der Trinkwassergewinnung, werden zur Absperrung nicht geeigneter Grundwasserleiter wasserundurchlässige Rohrsegmente in den entprechenden Bohrtiefen mitverwendet. Eine weitere Voraussetzung ist die dichte Verbindung der Rohrsegmente, um unplanmäßigen Wassereintritt zu verhindern.

Bekannte Techniken sind Gewinde-Schraub-Verbindungen unterschiedlicher Dimensionen und Gewindearten, Steckverbindungen, Muffen, Flansche, Bajonettverschlüsse, Schnellkupplungsverbindungen, Gummi-T-Muffen, Verbindungen Reibschweißverfahren, Schmelzverfahren oder Stumpfschweißen. Beispielsweise ist in EP-A-133 414 ein Drainage-Rohr beschrieben, das schlitzförmige Öffnungen aufweist. Solche Rohre können mit Muffen verbunden werden, was aber einen zusätzlichen Aufwand durch zusätzliche Werkstücke bedeutet.

Entwässerungselemente, die einen undurchlässigen, gelochten oder geschlitzten Stützkörper geringer Wandstärke als Rohr enthalten und mit textilen oder textilähnlichen Materialien als Filtermaterial umhüllt sind, weisen üblicherweise eine ausreichende Flexibilität auf, um die nach diesen Techniken verbundene Filtersäule den Abweichungen vom lotrechten Verlauf einer Entwässerungsbohrung beim Einbau folgen zu können.

Stützkörperfreie Entwässerungselemente, wie z.B. in DD-A-109 319 beschrieben, bestehen aus mit duroplastisch härtenden Kunststoffen gebundenen, ausgesuchten Kornfraktionen und weisen aus statischen Gründen größere Wandstärken von 25 bis 40 mm auf. Die verwendeten Kiesfraktionen können im Bereich von 1 bis 10 mm, bevorzugt 1 bis 6 mm, liegen. Ebenso kann der Aufbau des Entwässerungsrohres mehrlagig sein, d.h., die Rohrwandung besteht aus Lagen unterschiedlicher Körnung, beinhaltend die Sandschüttung 0,1 bis 1 mm als Außenhaut. Als Füllstoffe kommen bekannte Mineralien, wie Quarze, Siliciumcarbide, und andere hydrolytisch nicht beeinflußbare Mineralien in natürlicher, gebrochener oder kantengerundeter Form in Betracht. Der Bindemittelanteil richtet sich nach der Wahl der Füllstoffe, beträgt jedoch bevorzugt zwischen 2 und 30 Gew.-%. Sie stellen damit äußerst biegesteife Elemente dar. Die notwendige Biegsamkeit der Filtersäule wird bei diesen Elementen durch einen lockeren Verbund der Einzelelemente erreicht, die durch eine T-Profilmuffe aus Gummi oder Elastomeren abgedichtet werden.

Das Eigengewicht der Rohrsäule preßt die Stirnseiten der Elemente auf die Dichtungsflächen und sorgt damit für die Abdichtung. Der Nachteil dieser Anordnung besteht darin, daß der hängende Einbau der Rohrsäule nicht möglich ist und bei sehr engen Kurvenradien die Stöße der Elemente so weit aufklappen, daß Teile des außenliegenden Dichtprofils eingeklemmt werden können und somit ihre Funktion nicht mehr erfüllen.

Die erfindungsgemäße Aufgabe bestand nun darin, Verbindungselemente zu finden, die diese Nachteile nicht aufweisen, rationell herzustellen und vor Ort zu verwenden sind. Es wurden daher Klebesysteme gesucht, die eine "in situ"-Herstellung des T-Dichtprofils mittels einer Innen- und Außenform ermöglichen, mit kurzen Härtezeiten hoher Flexibilität bei guter Festigkeit und Kriechverhalten sowie einer guten Haftfestigkeit zum Entwässerungselement.

Gegenstand der vorliegenden Erfindung is daher ein flüssigkeitsdurchlässiges Element, bestehend aus mehreren stützkörperfreien Rohr-Segmenten, dadurch gekennzeichnet, daß die einzelnen Segmente an ihren Stirnflächen durch elastische und dichte Klebeverbindungen, insbesondere mit einem Gießelastomer, kraftschlüssig verbunden sind.

Als Gießelastomere kommen solche auf Basis ungesättigter Polyester aus Phthalsäure, Maleinsäure, deren Anhydride, Tetrahydrophthalsäure, Adipinsäure, Cumolsäure und mehrwertigen Alkoholen wie Ethylenglykol, Propylenglykol, deren Di- und/oder Trimeren, Neopentylglykol, Pentaerythrit sowie deren Lösungen in Comonomeren wie Styrol, $\alpha$-methylstyrol, Vinyltoluol, Allylphthalat oder Trimethylolpropandiallylether in Betracht. Desweiteren Epoxidharze als Umsetzungsprodukte des Epichlorhydrins mit Bisphenolen, Novolaken und/oder Kresolen, Anilin, cycloaliphatischen oder aliphatischen Dicarbonsäuren sowie ein- oder mehrwertigen Alkoholen, sowie Härter an sich bekannter Art auf Basis von Polyaminen, Polyamidoaminen, Mercaptanen und Säureanhydriden.

Als Gießelastomere sind bevorzugt solche Gießharze zu verstehen, die bei geringer Kriechneigung und guter Reißfestigkeit ein flexibles oder mittelfiexibles Biegezugverhalten zeigen.

Besonders bevorzupt sind Gießelastomere auf Polyurethanbzsis, bestehend aus Polyisocyanaten und Polyolen bzw. Polyaminen, wobei Polyole bevorzugt sind.

Bei den Polyisocyanaten handelt es sich um beliebige organische Polyisocyanate der aus der Polyurethanchemie an sich bekannten ArL Geeignet sind beispielsweise aliphatische, cycloaliphatische, araliphatische, aromatische und heterocyclische Polyisocyanate, wie sie z.B. von W. Sielken in Justus Liebigs Annalen der Chemie, 562, Seiten 75 bis 136, beschrieben werden, insbesondere der Formel

$$Q \, (NCO)_n,$$

in der

n = 2 bis 4 (vorzugsweise 2), und

Q einen aliphatischen Kohlenwasserstoffrest mit 2 bis 18 (vorzugsweise 6 bis 10 C-Atomen), einen cycloaliphatischen Kohlenwasserstoffrest mit 4 bis 15 (vorzugsweise 5 bis 10 C-Atomen), einen aromatischen Kohlenwasserstoffrest mit 6 bis 15 (vorzugsweise 6 bis 13 C-Atomen) oder einen araliphatischen Kohlenwasserstoffrest mit 8 bis 15 (vorzugsweise 8 bis 13 C-Atomen) bedeuten.

Besonders bevorzugte Isocyanate sind 4,4'-Diisocyanatodiphenylmethan, Polyisocyanatgemische der Diphenylmethanreihe, wie sie durch Phosgenierung von Anilin/Formaldehyd-Kondensaten in an sich bekannter Weise gewonnen werden, und die neben den genannten Diisocyanaten wechselnde Mengen an höheren Homologen enthalten, 2,4-Diisocyanatotoluol und seine technischen Gemische mit bis zu 35 Gew.-%, bezogen auf Gesamtgemisch an 2,6-Diisocyanatotoluol, Hexamethylendiisocyanat, 1-Isocyanato-3,3,5-trimethyl-5-isocyanatomethylcyclohexan (Isophorondiisocyanat), Urethan-, Carbodiimid-, Isocyanurat-, Allophanat- oder Biuret-modifizierte Polyisocyanate auf Basis der genannten unmodifizierten Polyisocyanate oder beliebige Gemische der beispielhaft genannten Polyisocyanate. Vorzugsweise werden die entsprechenden, bei Raumtemperatur flüssigen Polyisocyanate verwendet. Besonders bevorzugt werden als organische Polyisocyanate die Phosgenierungsprodukte von Anilin/Formaldehyd-Kondensaten verwendet.

Die Polyolkomponente weist eine Hydroxylzahl von 50 bis 800, vorzugsweise 95 bis 600 mg KOH/g auf. Sie besteht im allgemeinen aus einem Gemisch mehrerer Polyhydroxylverbindungen des Molekulargewichtsbereichs 62 bis 10 000. Als Einzelbestandteile des Gemisches kommen z.B. in Betracht:

- Niedermolekulare, in der Polyurethanchemie als Kettenverlängerungs- oder Vernetzungsmittel bekannte, gegebenenfalls Ethergruppen aufweisende Polyole des Molekulargewichtsbereichs 62 bis 400, wie Ethylenglykol, Propylenglykol, die isomeren Butandiole, Hexandiole, Octandiole, Trimethylolpropan, Glycerin, Pentaerythrit und/oder Sorbit, Polyethylenglykole des genannten Molekulargewichtsbereichs, Propylenglykole des genannten Molekulargewichtsbereichs, niedermolekulare Propoxylierungsprodukte von Trimethylpropan des genannten Molekulargewichtsbereichs oder beliebige Gemische derartiger niedermolekularer Polyole.

- Polyetherpolyole eines über 400, vorzugsweise bis zu 10 000, insbesondere 500 bis 6000, liegenden Molekulargewichts, wie z.B. die Alkoxylierungsprodukte der genannten einfachen, mehrwertigen Alkohole oder auch die Alkoxylierungsprodukte von Wasser, Polyaminen mit mindestens zwei NH-Bindungen und/oder von Aminoalkoholen mit mindestens zwei aktiven Wasserstoffatomen oder beliebige Gemische derartiger Polyetherpolyole des genannten Molekulargewichtsbereichs. Besonders bevorzugt sind die Ethoxylierungs- und/oder Propoxylierungsprodukte der beispielhaft genannten Startermoleküle oder von Gemischen von beispielhaft genannten Startermolekülen, wobei Ethylenoxid und/oder Propylenoxid gegebenenfalls im Gemisch und/oder nacheinander bei der Alkoxylierungsreaktion eingesetzt werden.

- Polyesterpolyole der aus der Polyurethanchemie an sich bekannten Art, wie sie z.B. durch Veresterung der obengenannten einfachen niedermolekularen Polyole mit mehrbasischen Säuren oder Anhydriden mehrbasischer Säuren erhalten werden. Geeignete Säurekomponenten sind z.B. Adipinsäure, Phthalsäure, Tetrahydrophthalsäure und/oder Hexahydrophthalsäure bzw. die Anhydride derartiger Säuren.

Gießelastomere können durch Zugabe von geeigneten Katalysatoren in ihrer Härtungsgeschwindigkeit beeinflußt werden. Geeignete Katalysatoren für die jeweiligen Systeme sind an sich bekannt wie z.B. tert.-Amine, metallorganische Verbindungen, bei Epoxiden bestimmte Säuren (z.B. Salicylsäure) und organische Peroxide für die Härtung von ungesättigten Polyestem.

Die Herstellung der Klebeverbindung erfolgt durch das Anlegen eines Formwerkzeuges, bestehend aus einer Außen- und Innenform, die durch Schläuche oder schlauchähnliche Elemente abgedichtet werden. Der Andruck dieser Dichtelemente kann hydraulisch, pneumatisch oder mechanisch erfolgen. Die Elemente bzw. Filterrohre werden zuvor durch Distanzpassungen, die im Formwerkzeug enthalten sein können, fixiert, unabhängig davon, ob die Elemente bzw. Filterrohre in senkrechter oder waagerechter Lage zusammengefügt werden. Danach erfolgt die Befüllung des Formwerkzeuges mit dem Gießelastomer.

Die Herstellung des Gießelastomergemisches erfolgt nach an sich bekannten Verfahren durch chargenweises Vermischen der Reaktionsharzkomponenten oder mittels 2K-Dosier- und -Mischanlagen, die aus Kolben- oder Zahnradpumpen, statischen und/oder dynamischen Mischern sowie Vakuumeinrichtungen zur Entgasung bestehen, sowie die Möglichkeit der Druckbeaufschlagung zur Förderunterstützung als auch Rührwerke und Temperiereinrichtungen enthalten können.

Die Härtung dieser Gießelastomere kann bei Umgebungstemperatur erfolgen oder zur schnelleren Durchhärtung bei erhöhter Temperatur oder aus einer Kombination beider Verfahren, indem bei Umgebungstemperatur angehärtet und nach Entformung bei erhöhter Temperatur ausgehärtet wird. Die dazu verwendeten Formgarnituren können hierzu in einer beheizbaren Ausführung gestaltet sein, die eine Verarbeitung auch bei tieferen Temperaturen erleichtern.

Grundsätzlich ist die Härtezeit der Gießelastomeren frei wählbar. Bevorzugt bewegt sie sich in einem Bereich von 30 Sekunden bis 2 Minuten.

Die Klebeverbindung ist vorzugsweise so gestaltet, daß

- die Haltbarkeit von mehreren, vorzugsweise mindestens 6-8 Stück Filterrohr- bzw. Elementverbindungen (Segmenten) für den Transport bzw. den Einbau gewährleistet ist;

- die Flexibilität der zusammengefügten Filtersäulen bis zu einem gewissen Grad gewährleistet ist. Dazu wird eine Flexibilitätszone zwischen den zu verbindenden Filterrohren durch das Gießharz ausgebildet;

- die Flexibilitätszone gewährleistet, daß die Filtersäule bei der Montage bzw. beim Einbau Abweichungen vom lotrechten Verlauf einer Entwässerungsbohrung folgen kann;

- eine endlose Herstellung von Filterrohrsträngen möglich ist, die sich durch absolute Dichtheit an den Filterstößen auszeichnet und ein Versanden des Brunnens ausschließt;

- die Verwendung der Filtersäulen in jeder Einbaulage möglich ist (horizontal/vertikal). Damit werden Möglichkeiten eines weiteren, zusätzlichen Einsatzes als Dränagerohr bzw. Hebung und Ableitung von Medien aus Deponien u.dgl. erschlossen.

Erfindungsgemäß werden die so hergestellten Elemente bzw. Filterrohre z.B. als Entwässerungselemente im Bergbau, vorzugsweise im Tagebau, im Deponiebereich sowie in der Land-, Bau und Forstwirtschaft eingesetzt Für die Trinkwassergewinnung müssen naturgemäß solche Gießelastomere verwendet werden, aus denen aufgrund ihrer chemischen Zusammensetzung keine gesundheitsschädlichen Stoffe abspalten bzw. herausgelöst werden können.

Für spezielle Anwendungen kann es sinnvoll bzw. erforderlich sein, daß eine begrenzte Anzahl von Einzelsegmenten miteinander verklebt werden, die dann ihrerseits wiederum durch eine elastische T-Muffe locker verbunden werden. Dabei besteht auch die Möglichkeit, die T-Muffe mit dem Gießelastomer zu verkleben.

Ferner ist es auch im Rahmen der vorliegenden Erfindung möglich, anstelle flüssigkeitsdurchlässiger Segmente teilweise undurchlässige Segmente mitzuverwenden (z.B. zur Abdichtung gegenüber bestimmter Grundwasserleiter).

Der Gegenstand der Erfindung soll anhand der folgenden Beispiele noch näher erläutert werden.

Beispiele

Bei der Ausgangskomponente a) handelt es sich um ein Polyethergemisch, bestehend aus:

- 35 Gew.-Teilen, bestehend aus 1 Mol Propylenglykol, 87 Gew.-Teilen Propylenoxid, 13 Gew.-Teilen Ethylenoxid mit einer OH-Zahl von 28,

- 30 Gew.-Teilen, bestehend aus 1 Mol Trimethylolpropan, 87 Gew.-Teilen Propylenoxid, 13 Gew.-Teilen Ethylenoxid mit einer OH-Zahl von 35,

- 25 Gew.-Teilen, bestehend aus 1 Mol Trimethylolpropan, 82,5 Gew.-Teilen Propylenoxid, 17,5 Gew.-Teilen Ethylenoxid mit einer OH-Zahl von 35,

- 7,7 Gew.-Teilen Ethylenglykol mit einer OH-Zahl von 1806,

- 5 Gew.-Teilen Zeolithpulver

mit einer OH-Zahl von 165, einer Viskosität bei 25°C von 1000 mPa.s und einer Dichte bei 20°C von 1,03.

Bei der Ausgangskomponente b) handelt es sich um ein Diphenylmethandiisocyanatisomerengemisch mit vorwiegendem Anteil an 4,4-Isomeren sowie Anteilen an höherfunktionellen Polymeren sowie Prepolymeren auf Basis Tripropylenglykol. Der Gehalt an Isocyanat beträgt 28,5 %, die Viskosität bei 25°C ist 140 mPa. s.

Ausgangskomponente c): Diazabicyclooctan (Beschleuniger).

Diese Ausgangskomponenten können wie folgt verarbeitet werden:
100 Gew.-Teile Polyol, entsprechend Ausgangskomponente a), werden mit 38 Gew.-Teilen Isocyanat, entsprechend Ausgangskomponente b), sowie 0,3 Gew.-Teile Beschleuniger entsprechend Ausgangskomponente c) bei einer Temperatur von 25°C in einer Zweikomponentenniederdruckanlage mittels dynamischen Mischer vermischt. Die Gelierzeit beträgt 40 s. Nach 3 min kann der gefertigte Prüfkörper entformt werden. Die Härte nach vollständiger Aushärtung wurde mit 65 Shore A ermittelt.

Bestimmung der Verbundfestigkeit:

Betonbiegeprismen, entsprechend DIN 1048, der Maße 4x4x16 cm wurden entsprechend der DD 109 317 gefertigt. Als Trennmittel wurden Siliconöl-Siloxanmischungen verwendet. Der Bindemittelanteil betrug für die Kornfraktionen 2 bis 8 mm und 2 bis 4 mm jeweils 5 Gew.-%. Im Vierpunktbiegeversuch wurde an den Prüfkörpern der Körnung 2 bis 8 mm eine Bruchkraft von 5816 N ermittelt Die Prüfkörper wurden zu je 8 cm Länge halbiert, im freien, drucklosen Verguß an den trennmittelbehafteten Stirnflächen nach Verfahren entsprechend Beispiel 1 verbunden. Als Gießelastomer wurde dabei ein Polyurethangemisch, entsprechend Beispiel 1, appliziert in einer Schichtdicke von 10 mm. Der Verguß erfolgte in der Art, daß ein T-förmiges Profil entstand, das die Seiten des Prüfkörpers um jeweils 10 mm überlappten. Nach Aushärtung bei einer Temperatur von etwa 22°C über 24 h wurde die Vierpunktbiegefestigkeit geprüft

| Körnung 2 - 8 mm | 5807 N |
| Körnung 2 - 4 mm | 6150 N |

Der Bruch erfolgte in beiden Prüfkörpersorten sowohl im Prüfmaterial des Entwässerungssegmentes als auch partiell an der Grenzfläche zum Verbindungselement. Die Prüfanordnung bestand in einem Auflageabstand von 100 mm und einem Druckschneidenabstand von 45 mm. Das Verbindungselement wurde mittig zwischen den Druckschneiden postiert. Die T-förmige Überdeckung befand sich in der Zugzone.

Beispiel 1

Entwässerungselemente entsprechend der DD-A-109 319, bestehend aus einer Kiesfraktion von 2 bis 4 mm und einem Bindemittelanteil von 5 Gew.-%, mit 414 mm Außendurchmesser und einer Wandstärke von 32 mm werden übereinander angeordnet und mittels einer Stützringform, bestehend aus einer Formhälfte für die Innenseite und einer für die Außenseite des Rohres, derart fixiert, daß ein Spalt von 10 mm entsteht.

Der Verguß dieses Spaltes erfolgt im freien, drucklosen Verguß wie vorstehend beschrieben. Nach 10 min Standzeit wurden die Formenhälften entfernt. Der Entwässerungselementverbund zeigte die gewünschten Eigenschaften.

Beispiel 2

Segmente von 25 cm Länge der Entwässerungselemente, wie unter Beispiel 1 beschrieben, wurden paarweise entsprechend Beispiel 1 miteinander verbunden. Die Anordnung der Rohrsegmente zum Verguß erfolgte jedoch horizontal. Die Formvorrichtung aus Beispiel 1 wurde durch eine Abdeckplatte ergänzt, so daß eine geschlossene Form entstand. Die Befüllung des Formnestes erfolgte durch eine Bohrung im oberen Scheitelpunkt des Formenringes mittels einer 2K-Dosier- und Mischmaschine in 1¼ min im freien Verguß. Nach 10 min Formenstandzeit konnten die beiden Formhälften entfernt werden.

Beispiel 3

Die Versuchsanordnung wurde entsprechend Beispiel 2 gewählt; jedoch erfolgte der Anguß vom unteren Scheitelpunkt des Formenrings über einen auswechselbaren Schlauch binnen 2 min. Entformung erfolgte wiederum nach 10 min.

Beispiel 4

Paarweise verbundene Segmente aus Beispiel 2 wurden einem Dauerstandversuch unter Druckbelastung unterzogen. Die vertikale Last betrug 5 t. Die Stauchung im elastischen Verbindungselement betrug nach 1000 Std. weniger als 0,1 %.

Beispiel 5

Paarweise verbundene Segmente aus Beispiel 2 wurden einer Zugprüfung unterzogen in der Art, daß die Klebeverbindung belastet wurde. Die maximale Zuglast bis zum Bruch betrug 12 KN.

Beispiel 6

Gemäß vorstehend angeführten Methoden wurde ein Bohrbrunnen mit stützkörperfreien Entwässerungssegmenten ausgebaut.

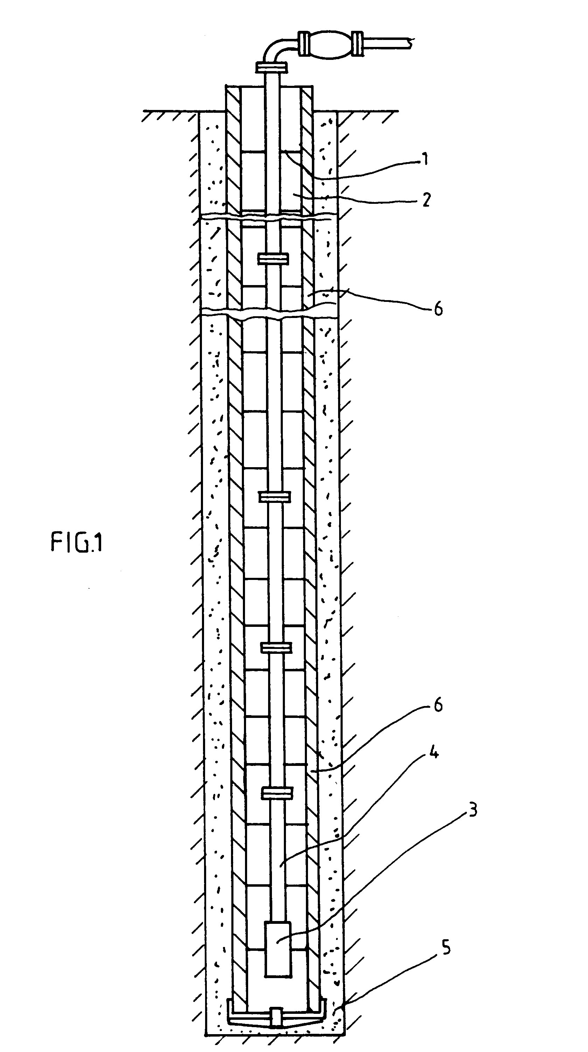

Fig. 1 zeigt einen ausgebauten Bohrbrunnen mit gemäß Erfindung hergestellten stützkörperfreien Brunnenrohren 2, verlorenem Bodenteller 5, UWM-Pumpe 3 (Unterwasser-Motor) mit Steigleitung 4 und verkiestem Ringraum.

Als Brunnenrohre 2 kommen Kiesfilter gemäß Beispiel 1 mit geringer Zugfestigkeit, die stehend eingebaut werden zum Einsatz. 6 Einzelsegmente von 1 m Länge werden jeweils an den Stirnflächen 1 gemäß dem Verfahren Beispiel 2 miteinander verklebt. Nach dem Aushärten des Klebers wird durch diese Rohrsektion 6 das Einbaugestänge geführt und mit dem Bodenteller 5 verschraubt, so daß die Rohrsektion 6 auf den Bodenteller 5 stehend in das vorbereitete Bohrloch abgesetzt werden kann. Das Abfangen der Rohrsäule erfolgt auf Trägern oberhalb der Rohrsektion am Einbaugestänge.

Der weitere Ausbau kann nun wie folgt durchgeführt werden:

Die nächste und alle weiteren Rohrsektionen 6 werden, wie bereits beschrieben, zusammengestellt und verklebt, wobei anstelle des Bodentellers 5 ein Einbauteller verwendet wird. Die Rohrsektion 6 wird über das Bohrloch geholt und am untersten Filterrohr abgefangen. Das Einbaugestänge wird nachgelassen und mit dem bereits im Bohrloch befindlichen Gestänge verschraubt. Beide Rohrsektionen werden vor Ort entsprechend Beispiel 1 verbunden. Der Rohrstrang wird in das Bohrloch abgesenkt, am Gestänge über dem letzten Filterrohr abgefangen und der Vorgang wiederholt sich, bis die Endstufe erreicht ist

Während des Einbauvorganges bilden die Rohrsektionen 6 stabile Einbaueinheiten, die eine rationelle Arbeitsweise gestatten. Ein Verrücken der Filterrohre aus der Lotrechten wird weitestgehend eingeschränkt, jedoch bleibt die Beweglichkeit der Filtersäule erhalten, so daß sich der Rohrstrang an Unregelmäßigkeiten der Bohrung und nachträgliche Verschiebungen des Gebirges anpassen kann. Zwängungskräfte und damit zusätzliche Beanspruchungen werden vermieden.

## Patentansprüche

1. Flüssigkeitsdurchlässiges Element, bestehend aus mehreren stützkörperfreien Rohr-Segmenten, dadurch gekennzeichnet, daß die einzelnen Segmente an ihren Stirnflächen durch elastische und dichte Klebeverbindungen, insbesondere mit einem Gießelastomer, kraftschlüssig verbunden sind.

2. Element gemäß Anspruch 1, dadurch gekennzeichnet, daß die einzelnen Segmente einen insbesondere kreisförmigen Querschnitt aufweisen und aus einem mineralischen Filtermaterial, das mit Epoxid-, ungesättigtem Polyester oder Polyurethan-Gießharzen verbunden ist, bestehen.

3. Element gemäß einem der Ansrüche 1 oder 2, dadurch gekennzeichnet, daß als Gießelastomere bzw. Gießharze Polyurethane eingesetzt werden.

4. Element gemäß einem der Ansprüche 1 bis 3, dadurch gekennzeichnet, daß mehrere verklebte Elemente mittels einer elastischen T-Muffe verbunden sind.

5. Element gemäß einem der Ansprüche 1 bis 4, dadurch gekennzeichnet, daß die einzelnen Segmente aus einem Kies-Polyurethangießharz-Gemisch bestehen.

6. Element gemäß einem der Ansprüche 1 bis 5, dadurch gekennzeichnet, daß zwischen den einzelnen Segmenten Elemente zur Einstellung eines Spaltabstands vorliegen.

7. Elemente gemäß einem der Ansprüche 1 bis 6, dadurch gekennzeichnet, daß anstelle flüssigkeitsdurchlässiger Segmente teilweise undurchlässige Segmente vorliegen.

8. Verwendung der Elemente gemäß einem der Ansprüche 1 bis 7 bei der Entwässerung und beim Brunnenbau.

9. Verwendung gemäß Anspruch 8 bei der Entwässerung im Bergbau.

## Claims

1. Liquid-permeable element comprising a plurality of tube segments without supporting bodies, characterized in that the individual segments are non-positively connected at their end faces by elastic and tight adhesive bonds, in particular using a casting elastomer.

2. Element according to claim 1, characterized in that the individual segments have an, in particular, circular cross-section and are made of a mineral filter material bonded with epoxy, unsaturated polyester or polyurethane casting resins.

3. Element according to one of claims 1 or 2, characterized in that polyurethanes are used as casting elastomers or casting resins.

4. Element according to one of claims 1 to 3, characterized in that a plurality of bonded elements are connected by an elastic T-coupler.

5. Element according to one of claims 1 to 4, characterized in that the individual segments are made of a mixture of gravel and polyurethane casting resin.

6. Element according to one of claims 1 to 5, characterized in that elements for adjusting a clearance are provided between the individual segments.

7. Elements according to one of claims 1 to 6, characterized in that partially impermeable segments are provided instead of liquid-permeable segments.

8. Use of the elements according to one of claims 1 to 7 for drainage and well-sinking.

9. Use according to claim 8 for drainage in mining

## Revendications

1. Elément perméable aux liquides, constitué de plusieurs segments tubulaires exempts de corps de soutien, caractérisé en ce que les segments individuels sont assemblés par adhérence par leurs surfaces frontales, par des assemblages collés élastiques et étanches, en particulier avec un élastomère coulé.

2. Elément selon la revendication 1, caractérisé en ce que les segments individuels présentent une section transversale en particulier circulaire, et sont constitués d'un matériau minéral de filtration qui est lié par des résines coulées d'époxy, de polyester insaturé ou de polyuréthane.

3. Elément selon l'une des revendications 1 ou 2, caractérisé en ce que l'on utilise comme élastomère coulé ou résine coulée, des polyuréthanes.

4. Elément selon l'une des revendications 1 à 3, caractérisé en ce que plusieurs éléments collés sont reliés au moyen d'un manchon élastique en T.

5. Elément selon l'une des revendications 1 à 4, caractérisé en ce que les segments individuels sont constitués d'un mélange de gravier et de résine de polyuréthane coulée.

6. Elément selon l'une des revendications 1 à 5, caractérisé en ce qu'entre des segments individuels sont prévus des éléments en vue de l'établissement d'un interstice.

7. Eléments selon l'une des revendications 1 à 6, caractérisés en ce qu'au lieu de segments perméables aux liquides, des segments partiellement imperméables sont prévus.

8. Utilisation des éléments selon l'une des revendications 1 à 7 pour le drainage et la construction de puits.

9. Utilisation selon la revendication 8, pour le drainage d'exploitations minières.

FIG.1